# EUROPEAN PATENT APPLICATION

(11) **EP 2 532 984 A1**
(43) Date of publication of application: **12.12.2012**
(21) Application number: 11739688.7
(22) Date of filing: 28.01.2011
(51) Int. Cl.: F24J 2/24, F24J 2/07

(54) **SOLAR HEAT RECEIVER**

(30) Priority: 05.02.2010 JP 2010024395
(71) Applicant: Mitsubishi Heavy Industries, Ltd., Tokyo 108-8215 (JP)
(72) Inventor: ATARASHIYA, Kenji, Tokyo 108-8215 (JP); HORIE, Shigenari, Tokyo 108-8215 (JP); MIZUTA, Keiji, Tokyo 108-8215 (JP); MAEDA, Manabu, Tokyo 108-8215 (JP); KOBAYASHI, Kazuta, Tokyo 108-8215 (JP)
(74) Representative: Bongiovanni, Simone
(86) International application number: PCT/JP2011/051790
(87) International publication number: WO 2011/096339

(57) **Abstract**

Heat-receiving pipes (23) of a heat receiver (10) have portions (K) having high heat flux on at the side near an opening (11b) in a length direction and extending to positions outside of a casing (11) in a radial direction. Expanded sections (20c) having an expanded pitch circle diameter (D) constituted by the plurality of heat-receiving pipes (23) are formed, and a heat input quantity per unit area of the heat-receiving pipe (23) is decreased in the portions (K) near the opening (11b).

## Description

### [Field of the Invention]

The present invention relates to a solar heat receiver for increasing a temperature of a fluid medium that drives a turbine of a solar heat power generator.

### [Background Art]

In recent years, in terms of prevention of global warming and suppression of the use of fossil fuels, power generation using clean energy such as natural energy having less harmful emissions such as carbon dioxide and nitrogen oxides, and recycled energy reusing the resources has received attention. The clean energy exceeds a certain amount of electrical energy required by the whole world. However, with regard to energy distribution of clean energy, effective energy (energy that may be externally taken and utilized) over a wide range is low. Due to this situation, since the power generation using clean energy has low conversion efficiency to power and high cost of power generation, such a power generation has not been sufficiently propagated. Thus, as the power generation type, power generation through solar thermal energy using power generation techniques such as gas turbines, steam turbines, and a gas turbine combined cycle (GTCC) is expected (for example, see Patent Document 1).

And now, in the use of solar thermal energy, normally, the light condensation and the heat collection are performed by a combination of a light condenser using a mirror and a heat receiver. As a combination method of the light condenser and the heat receiver, generally, there are two kinds of methods including a trough light condensation method and a tower light condensation method.
The trough light condensation method is a method in which solar light is reflected by a semi-cylindrical mirror (a trough), light and heat are collected in a pipe passing through a center of the cylinder, and the temperature of a thermal medium passing in the pipe is increased. However, in the trough light condensation method, the direction of the mirror is changed so as to track the solar light, but since the control of the mirror is one-axis control, it is difficult to expect a high temperature rise of the thermal medium.

On the other hand, the tower light condensation method is a method in which a light condensation heat receiver is arranged on a tower section (a support section) erected from the ground, a plurality of focusing reflected light control mirrors called a heliostat (a solar light condensation system) are arranged so as to surround the tower section, and the solar light reflected in the heliostat is guided to the light condensation heat receiver to perform light condensation and heat collection. Recently, in terms of further improving the efficiency of the power generation cycle, with regard to the thermal medium subjected to the heat exchange by the light condensation heat receiver, development of a power generator (a tower light condenser) of the tower light condensation type capable of further raising the temperature has been actively carried out.

### [Prior Art Document]

### [Patent Document]

[Patent Document 1] Japanese Patent No. 2951297

### [Disclosure of the Invention]

### [Problems to be Solved by the Invention]

However, in the heat receiver of the related art, the following problem has occurred.
That is, in the heat exchanger in the tower light condenser of the related art, the temperature of a fluid is raised by causing the fluid to flow through a plurality of heat-receiving pipes arranged on an inner surface of a cylindrical insulating container, irradiating the surface of the heat-receiving pipe with sunlight, and inputting heat. However, in this case, a difference in temperature is increased between a front surface of the heat-receiving pipe on which sunlight is directly incident and a back surface facing a wall side. Particularly, when the mirrors are arranged to be axially symmetrical, a heat load near an entrance of the heat-receiving pipe is increased by the area effect of the mirrors when the light is condensed and the temperature is increased. Furthermore, the temperature difference is generated between the front surface and the back surface of the heat-receiving pipe due to cycles of day and night, influence of clouds or a fluctuation in an irradiated amount of sunlight. As such, there is a drawback that thermal fatigue is easily generated particularly in the heat-receiving pipe near the entrance having a high temperature and a large temperature difference, durability of the heat-receiving pipe is required, and there is thus room for improvement at this point.

The present invention has been achieved in view of the above circumstances, and it is an object of the present invention to provide a solar heat receiver that is able to improve a life strength of the heat-receiving pipe by reducing a temperature difference between front and back surfaces (a front portion and a back portion in an incident direction of sunlight) of the heat-receiving pipe.

### [Means for Solving the Problem]

In order to achieve the object mentioned above, a solar heat receiver according to the present invention includes a casing having an opening on which sunlight is incident, and a plurality of heat-receiving pipes which are arranged in the casing in a circumferential direction of the casing and through which a heat medium is circulated. The heat-receiving pipes are configured so that portions having high heat flux on the opening side are extended to a radially outer position of the casing and expanded sections constituted by a plurality of heat-receiving pipes and having an expanded pitch circle diameter are formed.
The solar heat receiver according to the present invention is normally used in tower type solar heat power generation. The solar heat receiver according to the present invention includes a casing having an opening on which sunlight is incident, and a plurality of heat-receiving pipes that are vertically arranged inside the casing and raise the temperature of the heat medium flowing therein by the irradiation of the sunlight. The plurality of heat-receiving pipes are arranged so as to be spaced from each other and to extend in one direction. Centers of the heat-receiving pipes are arranged on the same circumference. The plurality of heat-receiving pipes may be bent outward in a radial direction in a portion near the opening of the casing. Thus, a circle passing through the centers of the plurality of heat-receiving pipes is configured so that a diameter in a region near the opening is expanded compared to a diameter in a region separated from the opening.

Herein, the pitch circle in the present invention is a circle which intersects center axes of the plurality of heat-receiving pipes through the centers of the heat-receiving pipes. That is, the plurality of heat-receiving pipes are arranged at a predetermined pitch (a space), and the centers thereof are arranged on the circumference of the pitch circle.
In the present invention, by expanding the diameter of the pitch circle in a portion of the heat-receiving pipe having high heat flux, surface areas of the heat-receiving pipe and a heat insulating material are increased in that portion, and thus it is possible to reduce a heat input quantity per unit area to the heat-receiving pipe. Moreover, the reduced amount of heat in the heat-receiving pipe enters from an interval between the heat-receiving pipes to the heat insulating material of the back side, and heat is further diffused to the surrounding.
That is, sunlight, which is incident on the opening of the casing and passes between the heat-receiving pipes, is incident on a wall surface of the casing separated from the opening of the casing behind the heat-receiving pipe. Moreover, the heat insulating material or a heat absorption material forming the inner wall surface of the casing is heated by sunlight passing between the heat-receiving pipes. The heated heat insulating material or the heat absorption material radiates heat, and heats the portion of the back side of the heat-receiving pipe to which sunlight is not directly irradiated.
According to the present invention, the interval between the heat-receiving pipes in the portion of the heat-receiving pipe having high heat flux near the opening of the casing is widened, and the number of the heat-receiving pipes arranged per unit area is reduced. Simultaneously, a distance between the heat-receiving pipe and the opening of the casing, in which a diameter of luminous flux of sunlight is minimized, is separated, and energy of sunlight directly irradiated per unit area of the surface of the heat-receiving pipe is reduced. Thus, in a region near the opening, more sunlight than in the past passes between the heat-receiving pipes, and energy of sunlight directly irradiated to the heat-receiving pipe is reduced. For this reason, the heat flux of the heat-receiving pipes may be reduced compared to the related art in the region near the opening of the casing.
In this manner, the heat flux of the heat-receiving pipe surface is reduced in a region in which the heat flux of the heat-receiving pipe is easily increased near the opening of the casing, and thus it is possible to reduce the temperature difference between the front surface (a surface of the center axis side of the casing) and the back surface (a surface of an inner surface side of the casing) of the heat-receiving pipe. That is, the temperature difference is reduced between a portion of the front side of the heat-receiving pipe to which sunlight incident from the opening of the casing is directly irradiated and a portion of the back side of the heat-receiving pipe to which sunlight incident from the opening of the casing is not directly irradiated. Accordingly, life strength of the heat-receiving pipe may be extended.

Furthermore, in the solar heat receiver according to the present invention, the diameter of the heat-receiving pipe in the expanded section may be greater than that of the heat-receiving pipe in a portion other than the expanded section. That is, in a region in which the diameter of the circle passing through the centers of the heat-receiving pipes is expanded, the diameters of each heat-receiving pipe may be expanded compared to the diameters of each heat-receiving pipe in other regions.
In the present invention, by increasing the diameter of the heat-receiving pipe in the region in which the diameter of the circle passing through the center of the heat-receiving pipe is expanded or the expanded section of the heat-receiving pipe, the surface area of the outer circumferential surface of the heat-receiving pipe is further expanded. Thus, it is possible to increase the amount of heat exchange between the heat medium flowing in the heat-receiving pipe and the heat-receiving pipe, and thus the length of the heat-receiving pipe may be shortened. Accordingly, it is possible to further reduce the temperature difference between the portion (the front surface) of the front side of the heat-receiving pipe to which sunlight is directly incident and the portion (the back surface) of the back side to which sunlight is not directly incident.
Furthermore, by expanding the diameter of the heat-receiving pipe as mentioned above, the volume of the heat medium in the heat-receiving pipe is increased. Thus, the heat medium in the heat-receiving pipe is increased in heat capacity, the temperature is not easily increased, and the temperature of the heat-receiving pipe is not easily increased. Thus, it is possible to further reduce the temperature difference between the front portion of the heat-receiving pipe and the back portion thereof in the incident direction of sunlight.

Furthermore, in the solar heat receiver according to the present invention, a heat transfer accelerator may be equipped inside the heat-receiving pipe in the expanded section. That is, in a region in which the diameter of the circle passing through the centers of the plurality of heat-receiving pipes is expanded, the heat transfer accelerator having a thermal conductivity higher than that of the heat-receiving pipe may be placed inside the heat-receiving pipe. Furthermore, thermal conductivity of the heat transfer accelerator may be higher than that of the heat medium.
According to the present invention, it is possible to increase the heat transfer coefficient inside the heat-receiving pipe and more effectively transfer heat from the heat-receiving pipe to the heat medium. Thus, since the amount of heat transfer between the heat-receiving pipe and the heat medium may be increased, length dimensions of the heat-receiving pipes may be shortened, and thus the size of the heat receiver may be reduced. Furthermore, when the diameter of the heat-receiving pipe is expanded in the expanded section or the region in which the diameter of the circle passing through the centers of the plurality of heat-receiving pipes is expanded, the heat transfer accelerator may be equipped inside the heat-receiving pipe without increasing the pressure loss of the inside of the heat-receiving pipe compared to other regions.

### [Effects of the Invention]

According to the solar heat receiver of the present invention, the temperature difference between the front portion and the back portion of the heat-receiving pipe may be reduced, and thus the life strength of the heat-receiving pipe may be improved.

### [Brief Description of the Drawings]

FIG. 1 is a diagram showing a tower type solar light condensation heat receiver according to a first embodiment of the present invention.
FIG. 2 is a plan view showing an arrangement of heliostats around a tower.
FIG. 3A is a transverse cross-sectional view showing a schematic configuration of the tower top.
FIG. 3B is a longitudinal cross-sectional view showing a schematic configuration of the tower top.
FIG. 4 is a perspective view showing a schematic configuration of a heat receiver.
FIG. 5 is a perspective view of a heat-receiving pipe shown in FIG. 4.
FIG. 6 is a cross-sectional view taken along line A-A shown in FIG. 3B showing a configuration of an insulating material (a radiation shield plate)
FIG. 7 is a perspective view that is seen from an arrow B of FIG. 6.
FIG. 8 is a longitudinal cross-sectional view showing a schematic configuration of the heat receiver.
FIG. 9 is a graph of solar heat incident intensity of the heat-receiving pipe shown in FIG. 8.
FIG. 10 is a longitudinal cross-sectional view showing a schematic configuration of a heat-receiving pipe according to a second embodiment.

### [Mode(s) for Carrying Out the Invention]

Hereinafter, a solar heat receiver of an embodiment of the present invention will be described with reference to the accompanying drawings. The embodiment shows an aspect of the present invention that is not limiting to the present invention, but is able to be arbitrarily changed in the range of technical ideas. Furthermore, in the drawings below, in order to better understand each configuration, scales, numbers or the like are different from those of an actual structure.

### First Embodiment

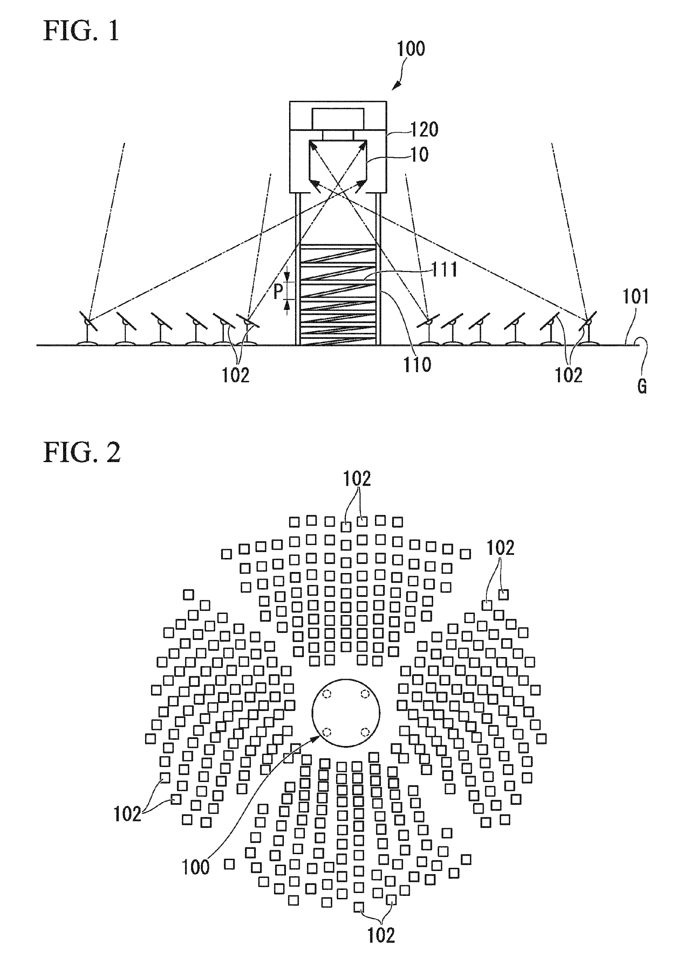

A tower type solar power plant shown in FIG. 1 includes a solar light heat receiver placed on a high tower, and mirrors called heliostats which are placed on the ground around the solar light heat receiver and are able to control reflected light. The tower type solar power plant condenses sunlight on the solar light heat receiver on the tower through the heliostats to generate electricity.
As shown in FIG. 1, a heliostat field 101 is provided on the ground G. A plurality of heliostats 102 for reflecting sunlight are placed in the heliostat field 101. Furthermore, a tower type solar light condensation heat receiver 100 which receives sunlight guided by the heliostats 102 is provided in a central section of the heliostat field 101. As shown in FIG. 2, the heliostats 102 are placed 360° around the entire circumference of the tower type solar light condensation heat receiver 100.

The tower type solar light condensation heat receiver 100 is constituted by a tower 110 erected on the ground G, an accommodation chamber 120 over the tower 110, and a heat receiver (a solar heat receiver) 10 provided in the accommodation chamber 120.

A plurality of reinforcing members 111 are provided in the tower 110. The reinforcing members 111 are placed so as to intersect the tower 110 in a height direction (a length direction) and are provided at intervals (distances between the reinforcing members adjacent to each other) P in the height direction of the tower 110. The interval P is increased toward the top (a side provided with the heat receiver 10) of the tower 10 in a range to be included in an optical path through which reflected light of sunlight is incident on the heat receiver 10 by the heliostat 102. Accordingly, sunlight reflected by the heliostat 102 is condensed in the heat receiver 10 on the tower 110 without being blocked by the reinforcing members 111. In addition, the arrangement structure of reinforcing members 111 may be, for example, a truss structure in terms of ensuring rigidity.

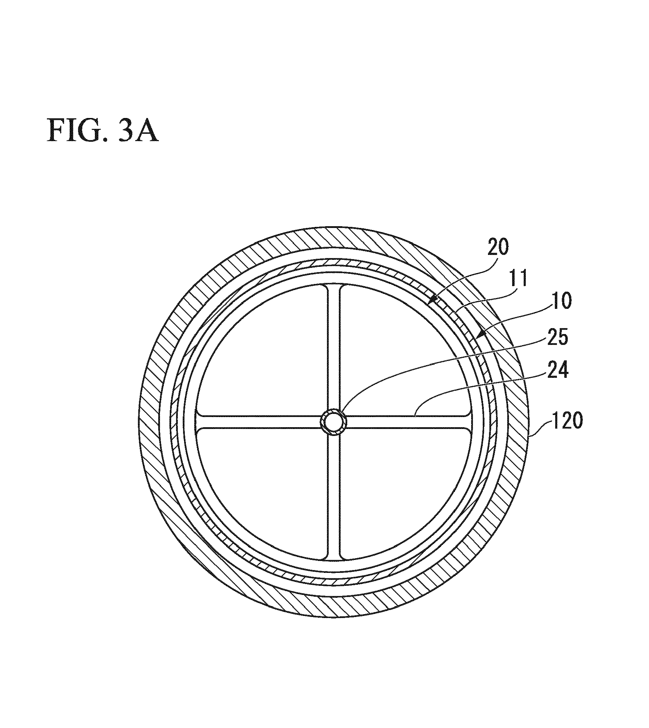

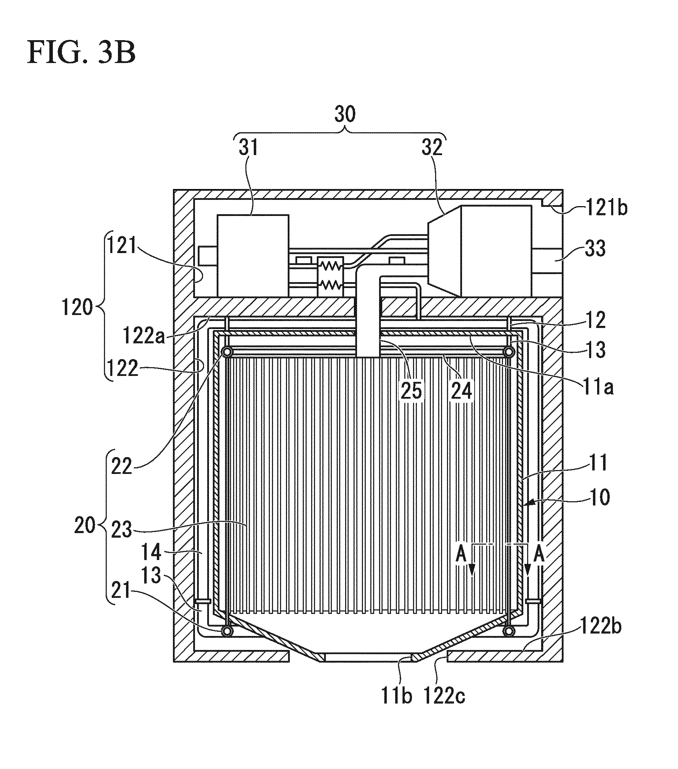

As shown in FIG. 3A, the accommodation chamber 120 of the top of the tower 110 has a circular plane shape.
As shown in FIG. 3B, the accommodation chamber 120 has two accommodation chambers including an upper accommodation chamber 121 and a lower accommodation chamber 122. An opening 122c for capturing sunlight is provided on a bottom of the lower accommodation chamber 122. The plane shape of the opening 122c is a circular shape. A diameter of the opening 122c is determined depending on a spot diameter of sunlight. The diameter of the opening 122c of the present embodiment is greater than or equal to the spot diameter of sunlight. Herein, the spot diameter is a diameter of a position at which the diameter of luminous flux of sunlight, which is reflected by the heliostats 102 of the heliostat field 101 and is incident on the opening 122c, is the smallest.

As shown in FIGS. 3A and 3B, the heat receiver 10 includes a cylindrical casing 11 and a heat-receiving pipe 20. In addition, the shape of the casing 11 is not limited to the cylindrical shape and may be a conical shape, a polygonal column shape, a spherical shape, an oval shape, or a combined shape of two or more of these. The heat receiver 10 is provided in the lower accommodation chamber 122. Specifically, the heat receiver 10 is fixed to an upper wall 122a of the lower accommodation chamber 122 via a lifting tool 12, and is suspended from the upper wall 122a in the lower accommodation chamber 122. That is, the heat receiver 10 is placed having a space between the inner walls in the position separated from the inner wall of the lower accommodation chamber 122 so as not to come into contact with the inner wall of the lower accommodation chamber 122. A plurality of lifting tools 12 are provided in the circumferential direction of the upper wall 122a having a circular plane shape. The lifting tools have flexibility. Furthermore, the lifting tools 12 pass through the casing 11. With such a configuration, in case that the heat exchange is performed between the heat-receiving pipe 20 and the heat medium flowing in the heat-receiving pipe 20 on the inside of the heat receiver 10, and even when the temperature of the casing 11 is increased (for example, 900 °C or more), the deformation due to the thermal expansion of the casing 11 is allowed. Furthermore, an opening 11b for capturing sunlight is provided on the lower surface side (the bottom) of the casing 11. Like the opening 122c mentioned above, the opening 11b is formed to have a circular plane shape. The diameter of the opening 11b is determined depending on the spot diameter of sunlight. The diameter of the opening 11b of the present embodiment is greater than or equal to the spot diameter of sunlight. Furthermore, the diameter of the opening 11b of the casing 11 of the present embodiment is smaller than or equal to the diameter of the opening 122c of the accommodation chamber 120.

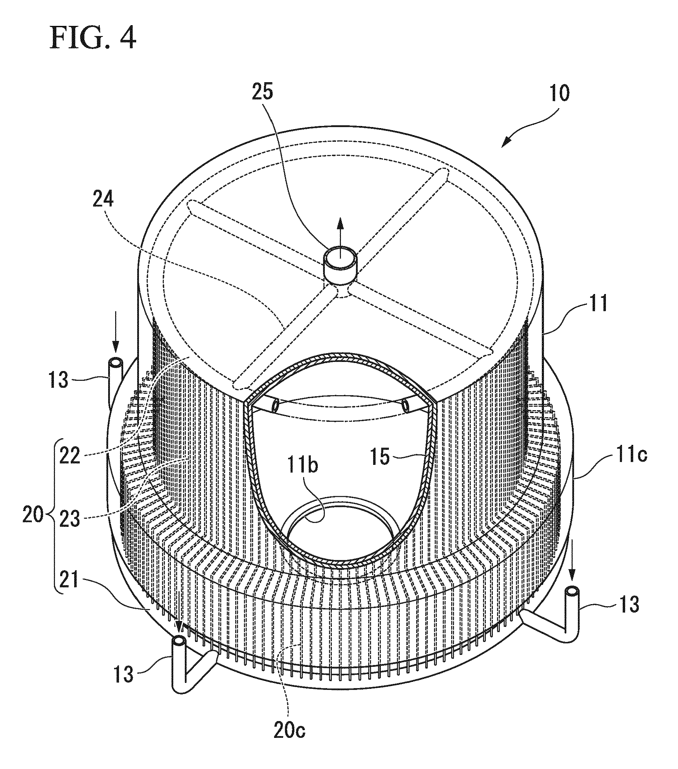

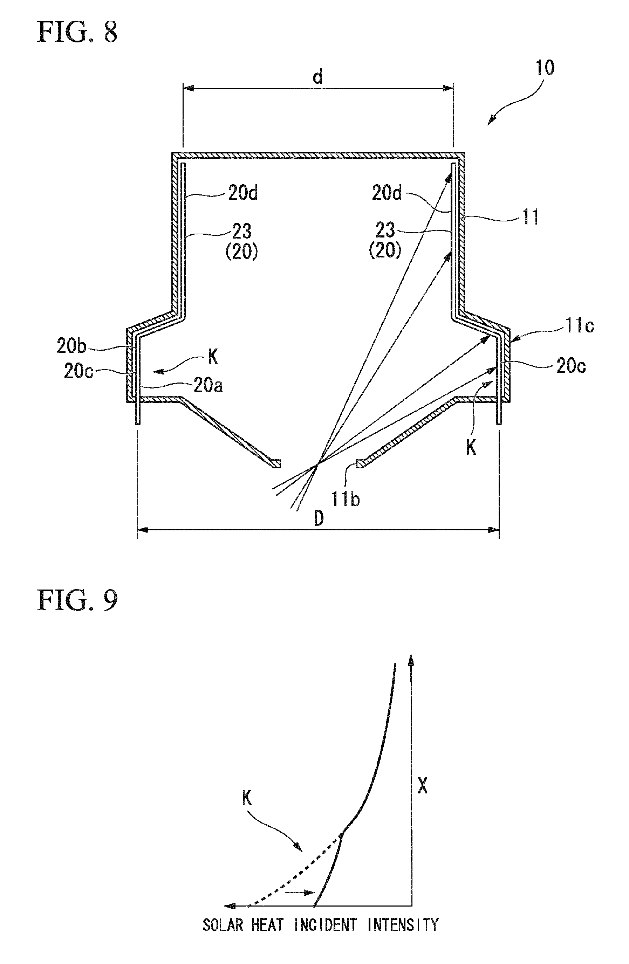

In addition, in FIG. 3B, in order to better illustrate an internal structure, the casing 11 is drawn in a cylindrical shape of the same diameter in an axial direction. However, actually, as shown in FIGS. 4 and 8, the casing 11 of the present embodiment has an expanded section 11c in which a diameter of a lower portion thereof is expanded so as to widen outward in the radial direction. That is, the diameter of a lower part of the casing 11 near the opening 11b is expanded compared to the diameter of an upper part of the casing 11 separated from the opening 11b. A heat-receiving pipe main body 23 extending in an axial direction (a vertical direction) of the casing 11 along an inner wall surface of the expanded section 11 c is placed inside the expanded section 11c.

As shown in FIG. 3B, a gas turbine 30 which is operated using fluid (the heat medium) heated by the heat receiver 10 as a working fluid, and a generator 33 which extracts actuating energy of the gas turbine 30 as electric power are placed inside the upper accommodation chamber 121. The gas turbine 30 has a compressor 31 which sucks and compresses fluid (for example, atmosphere) serving as the heat medium to generate a compressed fluid, and a turbine 32 which is operated using the fluid compressed by the compressor 31 and heated by the heat receiver 10 as the working fluid. Moreover, kinetic energy generated by the rotation of the turbine 32 is converted into electric energy by the generator 33 and is extracted as electric power.

Devices such as a temperature sensor which detects heat received by the heat receiver 10, an auxiliary drive device which starts the gas turbine 30, a regenerative heat exchanger which performs the heat exchange between the working fluid and the exhaust of the turbine 32 before the working fluid is heated by the heat receiver 10, an auxiliary combustor which performs auxiliary combustion of the working fluid and causes the working fluid to flow in the turbine 32, and a vibration damper which cancels the vibration of the generator 33 may be placed inside the upper accommodation chamber 121 as necessary. In this manner, an installation area of the device may be reduced by integrally placing the devices over the tower 110.

An opening 121b for capturing fluid (atmosphere) to be supplied to the compressor 31 is provided on the side surface of the upper accommodation chamber 121. In addition, the opening 121b is used to discharge the exhaust from the turbine 32 to the outside as necessary.

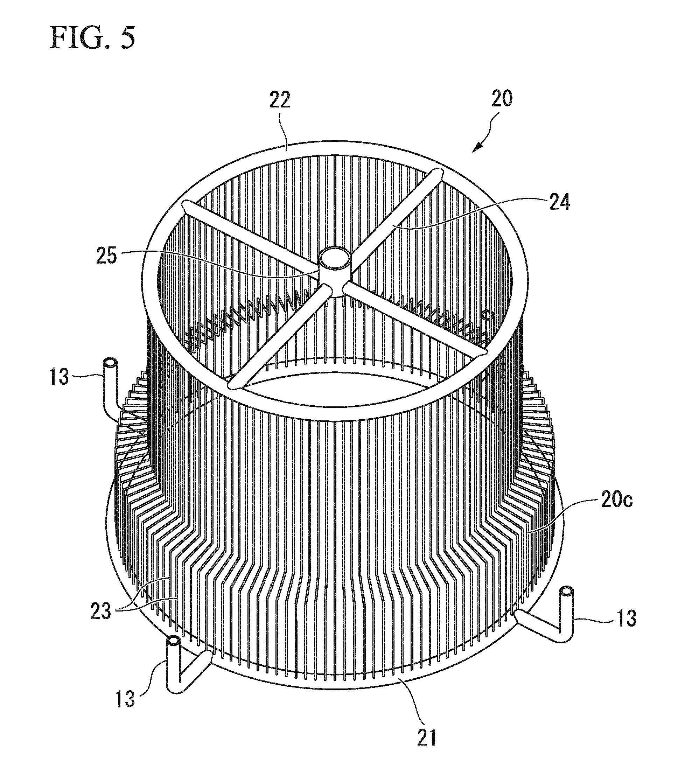

As shown in FIGS. 3A, 3B, 4 and 5, the heat-receiving pipe 20 has a lower header pipe 21, an upper header pipe 22, and a heat-receiving pipe main body 23. The lower header pipe 21 has a ring shape and is placed below the casing 11. Specifically, the lower header pipe 21 is exposed to the outside of the casing 11 and is placed near the lower wall 122b in the lower accommodation chamber 122.

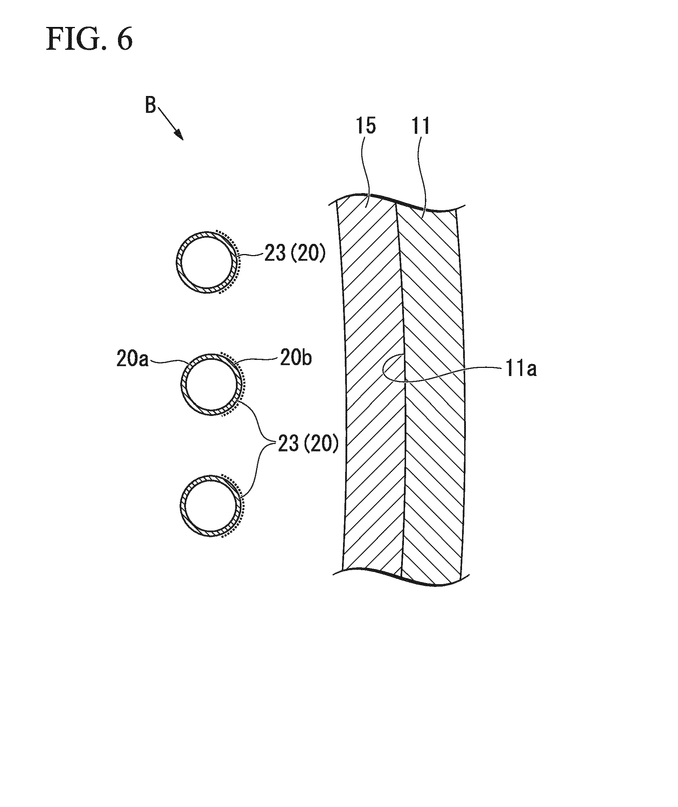

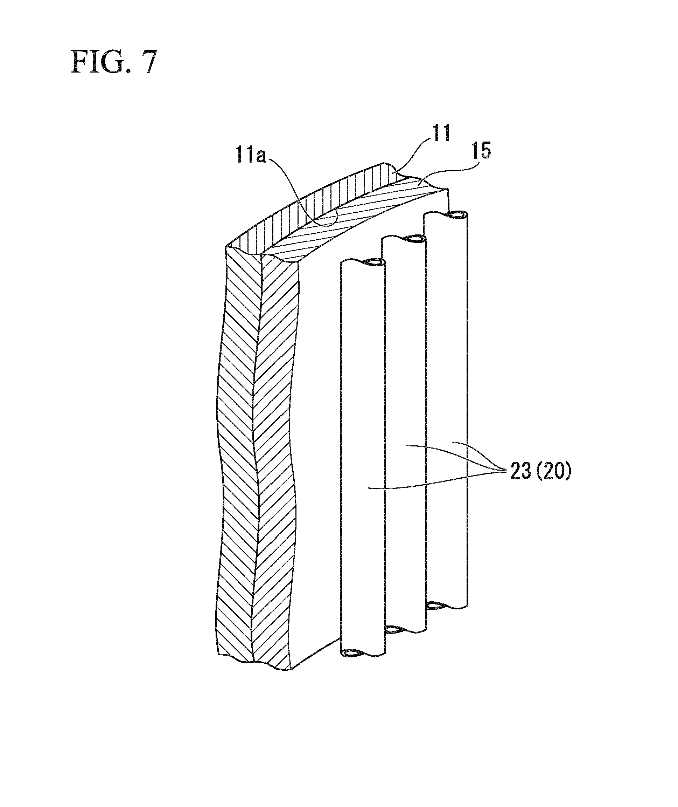

A plurality of heat-receiving pipe main bodies 23 are provided inside the casing 11 in a vertical direction between the upper header pipe 22 and the lower header pipe 21. The heat-receiving pipe main bodies 23 are connected to the upper header pipe 22 at one end thereof and are connected to the lower header pipe 21 at the other end thereof. The heat receiving pipe main bodies 23 raise the temperature of the working fluid (heat medium) flowing therein from the lower header pipe 21 by the irradiation of sunlight. The heated working fluid is discharged from the heat-receiving pipe main body 23 to the upper header pipe 22. The heat-receiving pipe main bodies 23 are placed at predetermined intervals (gaps) in the circumferential direction of the upper header pipe 22 (the lower header pipe 21) (see FIGS. 6 and 7). The end portion of the heat receiving pipe main body 23 connected to the lower header pipe 21 is exposed to the outside of the casing 11. Most of the part of the heat-receiving pipe main bodies 23 is formed in a shape (a straight line shape) that extends straight in the axial direction (a longitudinal direction) of the casing 11. Bending stress due to self weight is not applied to the portion of the heat-receiving pipe main bodies 23 formed in a straight line.
Furthermore, the working fluid in the heat-receiving pipe main body 23 flows from the lower header pipe 21 toward the upper header pipe 23 in one direction.

The lower header pipe 21 is an annular pipe which is inflected in a ring shape or a polygonal shape when viewed from plane, and is disposed below the casing 11. Specifically, the lower header pipe 21 is exposed to the outside of the casing 11 and is placed near the lower wall 122b in the lower accommodation chamber 122. With the configuration mentioned above, the heat-receiving pipe 20 is configured so that the upper header pipe 22 is fixed to the upper wall 122a in the lower accommodation chamber 122 via the lifting tool 12, all of which are suspended from the upper wall 122a.

An L-shaped inlet pipe 13 is connected to the lower header pipe 21. A connection pipe 14 is connected between the inlet pipe 13 and the compressor 31. The connection pipe 14 is exposed to the outside of the casing 11 and is placed along the inner wall of the lower accommodation chamber 122. The compressed fluid generated by the compressor 31 is supplied to the lower header pipe 21 via the connection pipe 14 and the inlet pipe 13. The compressed fluid (the heat medium) supplied to the lower header pipe 21 flows in the plurality of heat-receiving pipe main bodies 23 and the upper header pipe 22, and is heated by the heat-receiving pipe main body 23 and the upper header pipe 22 heated by thermal energy of sunlight that is incident from the opening 11b.

As shown in FIGS. 4, 6 and 7, an insulating material (a heat absorption material, a heat storage material or a radiation shield plate) 15 absorbing the solar heat is provided on the inner wall surface of the casing 11. The insulating material 15 is increased in temperature by absorbing the heat, and radiates the heat to the back surface (the portion of the back side on which sunlight is not directly incident) of the heat-receiving pipe main body 23. In this manner, the portion of the back side of the heat-receiving pipe 20 is heated by the thermal radiation of the insulating material 15 and the portion of the front side of the heat-receiving pipe 20 is heated by sunlight, and thus, the entire heat-receiving pipe 20 in the circumferential direction is heated. Furthermore, the insulating material 15 sends radiation heat generated from the heat-receiving pipe main body 23 back to the portion (the back surface) of the back side of the heat-receiving pipe main body 23, and stably heats the heat-receiving pipe main body 23. Furthermore, the insulating material 15 reduces an amount of heat going outward from the heat-receiving pipe main body 23 and the upper header pipe 22.

An outlet pipe 25 is connected to the upper header pipe 22 via a plurality of connecting pipes 24. The plurality of connecting pipes 24 are configured so that one ends thereof are connected to the upper header pipe 22, and the other ends thereof are connected to the outlet pipe 25. The connecting pipes 24 are placed in an X shape when viewed from the plane. The outlet pipe 25 is bent in the upper accommodation chamber 121, and is formed in an L shape when viewed from the plane shown in FIG. 3B. The end portion of the outlet pipe 25 opposite to the side connected to the plurality of connection pipes 24 is connected to the turbine 32. The compressed fluid, which flows through the inside of the heat-receiving pipe main body 23 and the upper header pipe 22 and is heated, is supplied to the turbine 32 as the high-temperature high-pressure working fluid via the connecting pipe 24 and the outlet pipe 25.

As shown in FIG. 8, the heat-receiving pipe main body 23 included in the heat-receiving pipe 20 of the heat receiver 10 is configured so that the portion having high heat flux at the opening 11b side in the length direction extends to a position of the outside of the casing 11 in the radial direction, and an expanded section 20c is formed where a diameter D of the pitch circle formed of the plurality of heat-receiving pipe main bodies 23 is expanded. That is, the diameter D of the pitch circle of the expanded section 20c is greater than a diameter d of a pitch circle in a section 20d other than the expanded section 20c. Herein, the pitch circle is a circle that intersects a central axis of each heat-receiving pipe main body 23 through the centers of the plurality of heat-receiving pipe main bodies 23. That is, the plurality of heat-receiving pipe main bodies 23 are arranged at predetermined pitches (gaps) in the circumferential direction of the casing 11, and the centers thereof are placed along the circumference of the pitch circle.
In other words, the plurality of heat-receiving pipe main bodies 23 are placed so as to be separated from each other in the circumferential direction of the casing 11 and to extend in the vertical direction. The centers of the heat-receiving pipe main bodies 23 are placed along the same circumference. The plurality of heat-receiving pipe main bodies 23 are bent outward in the radial direction of the casing 11 in the portion closer to the opening 11b than the central section of the casing 11 in the vertical direction. Accordingly, the expanded section 20c is provided in the heat-receiving pipe main body 23 in a region near the opening 11b of the casing 11. By providing the expanded section 20c in the heat-receiving pipe main body 23, the circle passing through the centers of the plurality of heat-receiving pipe main bodies 23 is configured so that the diameter D in the region near the opening 11b is expanded compared to the diameter d in the region separated from the opening 11b.
In addition, the heat-receiving pipe main body 23 corresponds to the heat-receiving pipe of the present invention.
Furthermore, in FIG. 8, the insulating material 15 shown in FIGS. 4, 6 and 7 is omitted.

Specifically, the expanded sections 20c of the heat-receiving pipe main bodies 23 are placed along the inner surface of the expanded section 11c of the casing 11 mentioned above at predetermined intervals and form a substantially trapezoidal shape when viewed from the side, and the lower ends thereof are projected outward from the casing 11.

FIG. 9 is a graph showing an effect of the expanded section 20c of the heat-receiving pipe main body 23 included in the heat-receiving pipe 20, a vertical axis thereof indicates the length (a distance from the opening 11b) X of the heat-receiving pipe main body 23, and a horizontal axis thereof indicates a heat input quantity (solar heat incident intensity) to the heat-receiving pipe main body 23. In FIG. 9, a dotted line is a result of a case in which the expanded section 20c is not provided in the heat-receiving pipe main body 23, and a solid line is a result of a case in which the expanded section 20c is provided. As shown in FIG. 8, by providing the expanded section 20c in a high temperature section K of the heat-receiving pipe main body 23 near the opening 11b, the incident solar strength to the heat-receiving pipe main body 23 is lowered as shown in FIG. 9.

In the solar heat receiver according to the first embodiment mentioned above, the diameter D of the pitch circle is expanded in the portion having high heat flux (the high temperature section K) of the heat-receiving pipe main bodies 23 included in the heat-receiving pipe 20. Accordingly, the surface area of the outer circumferential surface of the heat-receiving pipe 20 in that portion is expanded. In other words, the interval between the heat-receiving pipe main bodies 23 in the high temperature section K of the heat-receiving pipe main bodies 23 near the opening 11b of the casing 11 is widened, and the number of the heat-receiving pipe main bodies 23 to which sunlight is irradiated per unit area in the region is reduced. At the same time, the distance between the heat-receiving pipe main bodies 23 and the opening 11b of the casing 11, in which the diameter of luminous flux of sunlight is minimal, is separated, and energy of directly irradiated sunlight per unit area of the surface of the heat-receiving pipe main bodies 23 is reduced. Accordingly, in the region near the opening 11b, more sunlight than in the related art passes between the heat-receiving pipe main bodies 23, and it is possible to reduce the heat input quantity per unit area to the heat-receiving pipe main bodies 23 (see FIG. 9). Moreover, the reduced amount of heat in the heat-receiving pipe 20 including the heat-receiving pipe main bodies 23 enters the insulating material 15 (see FIGS. 6 and 7) provided behind (the back side of) the heat-receiving pipe main bodies 23 through the gap between the heat-receiving pipe main bodies 23, and the heat is further diffused to the surroundings thereof.
In this manner, the heat flux of the surface of the heat-receiving pipe main bodies 23 is reduced, it is possible to reduce the temperature difference between the portion (the front surface) 20a (the surface facing the central axis of the casing 11) of the front side of the heat-receiving pipe main bodies 23 and the portion (the back surface) 20b (the surface facing the inner surface of the casing 11) of the back side thereof, and thus the life strength of the heat-receiving pipe 20 may be extended.
Moreover, the fluctuation of a gas temperature of the heat-receiving pipe outlet is suppressed, the set gas temperature of the outlet side may be stabilized, and thus the operation of the turbine may be stabilized.

Next, another embodiment of the solar heat receiver of the present invention will be described based on the accompanying drawings. In the present embodiment, the same or similar members and portions as those of the first embodiment mentioned above are denoted by the same reference numerals, the descriptions thereof will be omitted, and configurations different from those of the first embodiment will be described.

### Second Embodiment

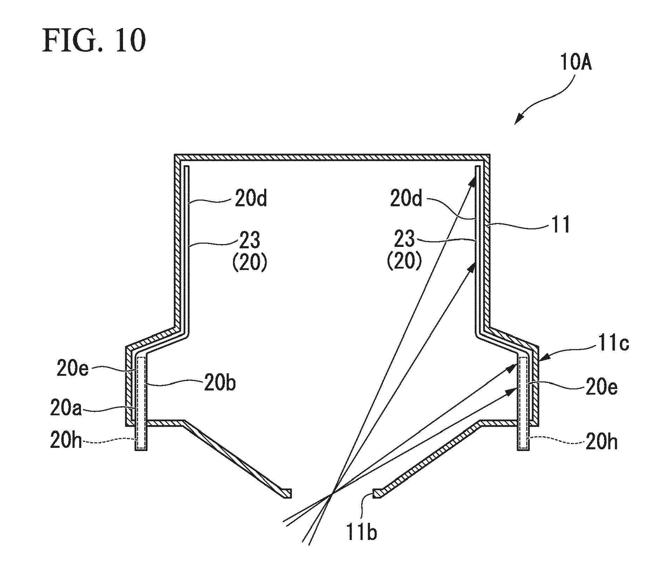

As shown in FIG. 10, a heat receiver (a solar heat receiver) 10A according to a second embodiment is configured so that a pipe diameter of an expanded section 20e in the heat-receiving pipe main bodies 23 included in the heat-receiving pipe 20 is greater than that of a portion other than the expanded section 20e. That is, in a region in which the diameter of the circle passing through the center of each heat-receiving pipe main body 23 is expanded, the diameter of each heat-receiving pipe main body 23 is expanded compared to the diameter of each heat-receiving pipe main body 23 in other regions.
In this manner, by increasing the diameter of the expanded section 20e of the heat-receiving pipe main bodies 23 included in the heat-receiving pipe 20, the surface area of the outer circumferential surface of the heat-receiving pipe 20 is further increased, and thus the heat input quantity per unit area may be further reduced. Furthermore, by enlarging the diameter of the heat-receiving pipe main bodies 23, the volume of the compressed fluid in the heat-receiving pipe main bodies 23 is increased. Accordingly, the compressed fluid in the heat-receiving pipe main bodies 23 is increased in heat capacity, the temperature does not rise easily, and the temperature of the heat-receiving pipe main bodies 23 does not rise easily either. Thus, it is possible to further reduce the temperature difference between the portion (the front surface) of the front side of the heat-receiving pipe main bodies 23 and the portion (the back surface) of the back side thereof to the incident direction of sunlight.

In addition, the expanded section 20e of the heat-receiving pipe main bodies 23 may be equipped with a heat transfer accelerator 20h. That is, the heat transfer accelerator 20h having thermal conductivity higher than that of the heat-receiving pipe main bodies 23 may be placed inside the heat-receiving pipe main bodies 23 in the region in which the diameter D of the circle passing through the centers of the plurality of heat-receiving pipe main bodies 23 is expanded. Furthermore, the thermal conductivity of the heat transfer accelerator 20h may be higher than that of the compressed fluid flowing in the heat-receiving pipe main bodies 23.
According to the present embodiment, by increasing the diameter of the expanded section 20e of the heat-receiving pipe main bodies 23 included in the heat-receiving pipe 20, the heat transfer accelerator 20h may be equipped inside the heat-receiving pipe main bodies 23 without increasing the pressure loss. At the same time, the heat transfer coefficient inside of the heat-receiving pipe main bodies 23 may be increased. Accordingly, since an amount of heat exchange between the heat-receiving pipe main bodies 23 and the compressed fluid may be increased, the length dimension of the heat-receiving pipe main bodies 23 may be shortened, and thus the heat receiver 10A may be downsized.
For example, the pipe diameter of the heat-receiving pipe main bodies 23 is 1.3 times that of the expanded section 20e, the expanded section 20e is equipped with the heat transfer accelerator 20h, and it is therefore possible to expand the amount of heat exchange by about 1.6 to 2.4 times compared to an original pipe diameter.

Although the embodiments of the solar heat receiver according to the present invention have been described, the present invention is not limited to the embodiments mentioned above. Additions, omissions, substitutions, and other variations may be made to the present invention without departing from the spirit and scope of the present invention. The present invention is not limited by the above description, but only by the appended claims.
For example, in the present embodiment, although the shape of the expanded section 20c of the heat-receiving pipe 20 is substantially a trapezoidal shape when viewed from the side, the shape is not limited thereto. For example, in the region in which the portion having the high heat flux (the high temperature section K) near the opening 11b is included, a tapered shape which gradually spreads radially outward from the casing 11 toward the bottom or in an umbrella shape may be adopted.

Furthermore, the pipe diameter dimension of the expanded section 20e of the heat-receiving pipe main bodies 23 having the large diameter in the second embodiment may be arbitrarily set, and may be determined depending on the conditions such as the presence or the absence of the heat transfer accelerator as mentioned above.
In addition, the components of the embodiments mentioned above may be suitably replaced with well-known components, and the embodiments mentioned above may be suitably combined with each other.

### [Industrial Applicability]

A solar light heat receiver includes a casing having an opening on which sunlight is incident, and a plurality of heat-receiving pipes that are vertically arranged inside the casing and raise the temperature of a heat medium flowing therein by the irradiation of the sunlight. The plurality of heat-receiving pipes are arranged so as to be spaced from each other and to extend in one direction. Centers of the respective heat-receiving pipes are arranged on the same circumference. The plurality of heat-receiving pipes are bent outward in the radial direction in a portion near the opening of the casing. Thus, a circle passing through the centers of the plurality of heat-receiving pipes is configured so that a diameter in a region near the opening is expanded compared to a diameter in a region separated from the opening.

### [Description of Reference Numerals and Signs]

10, 10A: heat receiver (solar heat receiver)
11: casing
11b: opening
11c: expanded section
15: insulating material
20: heat-receiving pipe
20a: front surface
20b: back surface
20c, 20e: expanded section
20h: heat transfer accelerator
23: heat-receiving pipe main body
D, d: pitch circle diameter
K: high temperature section

## Claims

1. A solar heat receiver comprising:
a casing having an opening on which sunlight is incident; and
a plurality of heat-receiving pipes which are arranged in the casing in a circumferential direction of the casing and through which a heat medium is circulated,
wherein the heat-receiving pipes are configured so that portions having high heat flux on the opening side are extended to a radially outer position of the casing, and
expanded sections constituted by the plurality of heat-receiving pipes and having an expanded pitch circle diameter are formed.

2. The solar heat receiver according to claim 1, wherein the diameter of the heat-receiving pipe in the expanded section is greater than that of the heat-receiving pipe in a portion other than the expanded section.

3. The solar heat receiver according to claim 1 or 2, wherein a heat transfer accelerator is equipped inside the heat-receiving pipe in the expanded section.
